# EUROPEAN PATENT APPLICATION

(11) **EP 4 691 936 A1**
(43) Date of publication of application: **11.02.2026**
(21) Application number: 24778791.4
(22) Date of filing: 15.02.2024
(51) Int. Cl.: B65D 25/14, B31D 5/00, B65D 3/06, B65D 3/14

(54) **COMPOSITE CONTAINER AND METHOD FOR MANUFACTURING COMPOSITE CONTAINER**

(30) Priority: 31.03.2023 JP 2023057757
(71) Applicant: Tokan Kogyo Co., Ltd., Tokyo 141-0022 (JP)
(72) Inventor: ASANO Makoto, Tokyo 141-0022 (JP); HISATOMI Yoshito, Tokyo 141-0022 (JP); NARITA Kodai, Tokyo 141-0022 (JP); ICHIKURA Shinji, Tokyo 141-0022 (JP); KUBOTA Fumiya, Tokyo 141-0022 (JP)
(74) Representative: Serjeants LLP
(86) International application number: PCT/JP2024/005198
(87) International publication number: WO 2024/202646

(57) **Abstract**

A composite container includes a paper container with a body member and a bottom plate member joined together and a resin film bonded to the inner surface of the paper container. Base paper of the paper container is exposed at an adhesion surface between the paper container and the film. With respect to the paper container, joining at a side joint that joins the side surface of the body member and joining at a bottom joint that joins the body member and the bottom plate member are each achieved via bonding agent. The film includes an adhesive layer adhered to the base paper of the paper container.

## Description

### TECHNICAL FIELD

This invention relates to composite containers having a film bonded to the inner surface of a paper container and methods of manufacturing composite containers.

### BACKGROUND

Some composite containers may have an inner surface coated with resin to prevent the contents from leaking from the joints of the containers (see, for example, patent document 1). The container of patent document 1 is such that a preformed resin inner container is fitted into a paper outer container, and the opening edge of the inner container and the opening edge of the outer container are rolled outwardly together to form a curled portion. In other words, the inner container and the outer container are joined by forming a double-curled portion with the inner container and the outer container. The container of patent document 1 suffers from the problems of an increased amount of resin compared to the case where only a paper container is used, and a reduction in the internal volume of the container due to the existence of the space between the outer container and the inner container.

In some other methods of manufacturing composite containers, a preform having a shape corresponding to the opening of the container is formed in advance by injection molding and then attached to the inside of the container while stretching the preform by compressed air molding or vacuum molding (see, for example, patent document 2). While the manufacturing method of patent document 2 attaches resin material to the inner surface of the container by compressed air molding of the heated resin preform or the like, there is no description of the adhesion between the resin and paper.

In some other methods of manufacturing composite containers, a lining film is adhered to the inside of a paper outer cup by vacuum suction to cover the inner surface of the outer cup with an inner cup (see, for example, patent document 3). In the manufacturing method of patent document 3, the bottom plate member of the container is intermittently joined to the lower portion of the container body member, and vacuum suction is performed through the non-jointed portions between the bottom plate member and the container body member to adhere the lining film to the entire inner surface of the container. In the manufacturing method of patent document 3, the lining film is stretched by lowering a plug while the plug is in contact with the lining film as an aid to vacuum suction. However, this requires adjustment of the descent speed of the plug, the degree of contact between the plug and the lining film, and the like.

### PRIOR ART LITERATURE

### Patent Literature

[Patent Document 1] JP 2001-180641 A
[Patent Document 2] JP H03-176128 A
[Patent Document 3] JP 2004-224422 A

### SUMMARY

The present invention has been invented in view of the above background technology, and an objective of the present invention is to provide a composite container having a resin film stably adhered to the inner surface and a method of manufacturing such a composite container.

In one embodiment, a composite container include: a paper container with a body member and a bottom plate member joined together; and a resin film bonded to the inner surface of the paper container. Base paper of the paper container is exposed at an adhesion surface between the paper container and the film. With respect to the paper container, joining at a side joint that joins the side surface of the body member and joining at a bottom joint that joins the body member and the bottom plate member are each achieved via bonding agent. The film includes an adhesive layer adhered to the base paper of the paper container.

In one embodiment, a manufacturing method of a composite container is provided, wherein the composite container includes: a paper container with a body member and a bottom plate member joined together; and a resin film bonded to the inner surface of the paper container. Base paper of the paper container is exposed at an adhesion surface between the paper container and the film, and the film includes an adhesive layer adhered to the base paper of the paper container. The manufacturing method includes: a bonding agent applying step of applying bonding agent to portions of the inner surface of the paper container, the portions corresponding to a side joint that joins the side surface of the body member together and a bottom joint that joins the body member and the bottom plate member; a joining step of completing respective joining of the side joint and the bottom joint; and a film bonding step of bonding the film to an adhesion surface of the paper container using a pressure difference.

### BRIEF DESCRIPTION OF THE DRAWINGS

FIG. 1A is a conceptual cross-sectional view illustrating a composite container.
FIG. 1B is a developed view illustrating a body member of the composite container.
FIG. 1C is a partial enlarged cross-sectional view of the composite container.
FIGS. 2A and 2B are enlarged cross-sectional views of the periphery of the bottom joint of the composite container.
FIG. 3 is a conceptual diagram illustrating feeding of a blank of a body member.
FIG. 4A is a diagram illustrating the thicknesses of a film bonded to a paper container.
FIG. 4B is a table illustrating implementation examples of film thickness.
FIG. 5 is a conceptual cross-sectional view illustrating a film bonding device used in a film bonding step.
FIG. 6 is a flowchart illustrating a manufacturing method of a paper container.
FIGS. 7A to 7C are conceptual diagrams illustrating the manufacturing method of the paper container.
FIGS. 8A and 8B are tables illustrating implementation examples of composite containers.
FIGS. 9A to 9D are developed diagrams illustrating application positions of bonding agent on body members in connection with implementation examples of composite containers.
FIGS. 10A to 10C are diagrams illustrating modified examples of a side applied portion of bonding agent in a side joint.
FIGS. 11A to 11E are diagrams illustrating modified examples of bottom applied portions of bonding agent in a bottom joint.
FIGS. 12A and 12B are diagrams illustrating modified examples of applied portions of bonding agent in a bottom joint.
FIG. 13 is a conceptual diagram illustrating a modified example of a composite container.
FIGS. 14A to 14C are enlarged cross-sectional views illustrating an inlet portion of a composite container in modified examples.
FIG. 15 is an enlarged cross-sectional view of the peripheral of a bottom joint of a composite container in a modified example.

### DETAILED DESCRIPTION

### Embodiments

A description of containers and methods of manufacturing containers according to the present invention is given below with reference to the drawings.

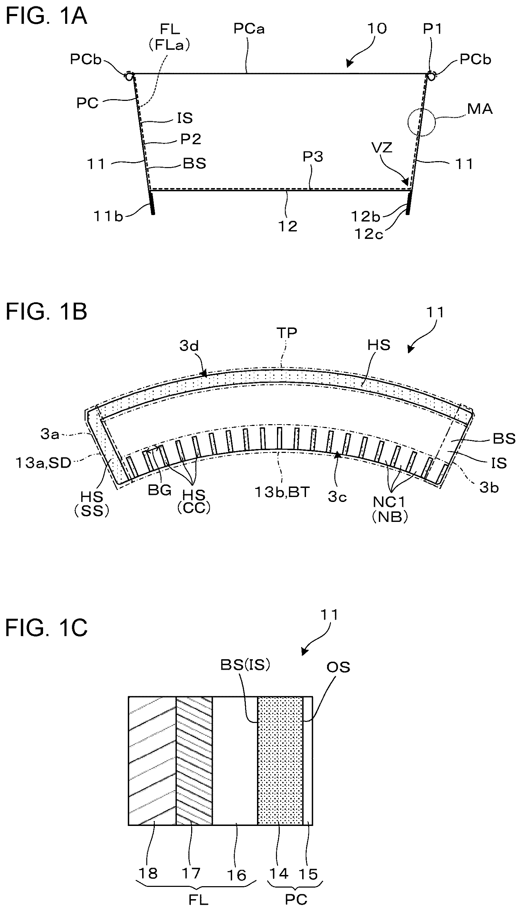

FIG. 1A is a cross-sectional view illustrating one example of a composite container 10. FIG. 1B is a developed view of a body member 11, which will be described later, of the composite container 10 shown in FIG. 1A. In FIG. 1B, portions to which bonding agent HS, which will be described later, is applied are indicated by matte patterns. FIG. 1C is an enlarged view of a portion of the composite container 10 shown in FIG. 1A surrounded by a dashed line MA.

As shown in FIG. 1A, the composite container 10 is a cup-shaped container having a resin film FL bonded to the entire inner surface IS of a paper container PC. The composite container 10 includes an inlet portion PCa, which is a circular opening, at the top, and the side surface of the composite container 10 is tapered in the vertical direction. The composite container 10 includes a curled portion PCb formed by outwardly curling the peripheral portion of the opening.

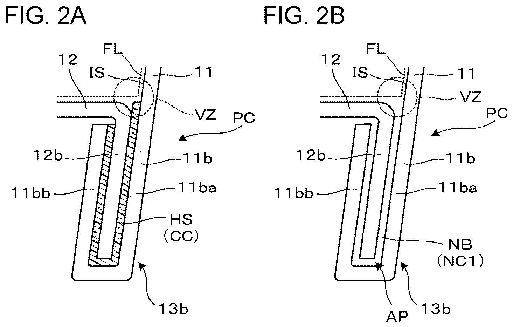

The paper container PC is assembled by joining a body member 11 and a bottom plate member 12. The bottom portion P3 of the paper container PC is closed by the bottom plate member 12. The outer periphery 12c of the bottom plate member 12 has a peripheral wall 12b that is bent downward. The peripheral wall 12b is joined to the bottom portion 11b of the body member 11. As shown in enlarged form in FIGS. 2A and 2B, the bottom portion 11b of the body member 11 is bent inwardly at the bottom end, and the peripheral wall 12b is clamped between the outer wall 11ba and the inner wall 11bb of the body member 11.

With respect to the paper container PC, the joining at the side joint 13a and the joining of the bottom joint 13b shown in FIG. 1B are each achieved via bonding agent HS. The side joint 13a is a portion (hereinafter also referred to as the side SD) that joins the side surface of the body member 11. Here, the portion that joins the side surface of the body member 11 refers to the end portions 3a and 3b of the side surface of the body member 11, and the body member 11 is formed into a cylindrical shape by bonding the two end portions 3a and 3b so that the end portions 3a and 3b overlap each other. The side SD corresponds to the inner surface IS of the end portion 3a, which is one of the end portions 3a and 3b of the side surface of the body member 11. The bonding agent HS is applied to the entirety of the side SD, i.e., the inner surface IS of the one end portion 3a to form a side applied portion SS.

The bottom joint 13b is a portion that joins the body member 11 and the bottom plate member 12 (also referred to as the bottom BT, hereinafter). With respect to the body member 11, the portion that joins the body member 11 and the bottom plate member 12 refers to a region of the inner surface IS of the bottom portion 3c of the body member 11 other than the end portion 3a (the side SD) of the side surface. The bonding agent HS is applied to partial regions of the bottom BT to form bottom applied portions CC. Specifically, the bottom applied portions CC are located at a plurality of positions at regular cycles or intervals. The bottom applied portions CC each have, for example, a rectangular shape, and have a uniform width or the same area. The region of the bottom BT other than the bottom applied portions CC is referred to as the bottom non-applied portion NC1, corresponding to unbonded portions NB, which will be described later. The bottom applied portions CC include a plurality of elongated shaped regions. Each of the regions is arranged substantially in parallel to the vertical direction of the paper container PC. In the developed view of FIG. 1B, the bottom applied portions CC are arranged slightly radially along the bottom portion 3c.

With respect to the bottom BT, the bottom coat area of the regions to which the bonding agent HS is applied ranges from 26% to 80% of the total area of the bottom BT. The bottom coat area is the area of the region of the bottom BT other than the bottom non-applied portion NC1, i.e., the total area of the plurality of bottom applied portions CC. The number of the bottom applied portions CC is, for example, 20.

As shown in FIGS. 2A and 2B, the bottom joint 13b includes portions containing the bonding agent HS and portions not containing the bonding agent HS (unbonded portions NB). Due to the unbonded portions NB shown in FIG. 2B, a portion of the bottom joint 13b is provided with air vents AP which allow air to be vented to the outside of the paper container PC. In other words, the air vents AP are formed by the bottom non-applied portion NC1, where the bonding agent HS is not applied. The unbonded portions NB form small gaps between the bottom portion 11b of the body member 11 and the peripheral wall 12b of the bottom plate member 12, and these gaps are used as the air vents AP. The air vents AP allow air to be vented to the outside of the paper container PC by performing vacuum suction when the film FL is bonded to the inner surface IS of the paper container PC. This increases the ventilation during the vacuum suction, which improves the formability of the film FL.

The bonding agent HS is also applied to a strip-shaped portion (hereinafter also referred to as the top TP) corresponding to the curled portion PCb of the paper container PC. The top TP corresponds to the inner surface IS of the top portion 3d of the body member 11. The entirety of the top TP is applied with the bonding agent HS. The curled portion PCb is curled, rolling up the bonding agent HS applied to the inner surface IS of the paper container PC.

As described above, the bonding agent HS is applied to the side SD, the bottom BT, and the top TP of the blank of the body member 11 so as to maintain the paper container PC in a cup shape. When the bonding agent HS is applied to the side SD and the bottom BT, the bonding agent HS can also be applied to the top TP at the same time. This reduces the number of processes. In addition, by partially applying the bonding agent HS to the inner surface IS of the paper container PC, the amount of resin used to join the components of the paper container PC to each other can be reduced, which is environmentally friendly. This also makes it possible to define on the base paper 14 a portion in direct contact with the film FL of the inner surface IS of the paper container PC, referred to as the adhesion surface BS. Since the bare surface of the base paper 14 has better adhesion to an adhesive layer 16, which will be described below, of the film FL than a surface obtained by applying a general laminate finish to the base paper 14, the adhesion between the paper container PC and the film FL is stable.

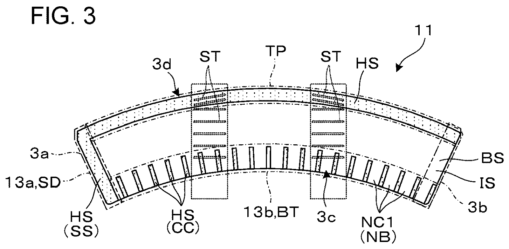

The bonding agent HS applied to the top TP prevents lubricant used during the processing of the curled portion PCb from permeating the base paper 14 of the paper container PC. This effectively prevents unwinding of the curled portion PCb. If the lubricant permeates the base paper 14, the base paper 14 loses its rigidity and becomes difficult to curl, resulting in a container in which the curled portion PCb is not completely curled or a container in which the curled portion PCb is buckled. In addition, when the curled portion PCb is pressed with a hot plate (not shown), application of the bonding agent HS to the top TP, which corresponds to the curled portion PCb, effectively prevents the curled portion PCb from unrolling. Furthermore, by applying the bonding agent HS to the top TP, blanks of the body member 11 can be fed one by one when paper containers PC are assembled. As shown in FIG. 3, the blanks are fed to an assembly device by using a holding device (not shown) having slits ST. In this situation, the blanks can be fed one by one by vacuuming through the slits ST. When the portions of paper overlapping the slits ST are air-permeable, two blanks may be sucked in. By applying the bonding agent HS to the top TP, the applied portions are less permeable to air, and the suction of two blanks can be prevented. It should be noted, however, that it is not necessary to apply the bonding agent HS if the material of the top TP makes it difficult for air to pass through.

The bonding agent HS is applied to the blank of the body member 11 in advance before the paper container PC is assembled. The bonding agent HS may be applied by printing, for example. The application amount of the bonding agent HS is, for example, 5 g/m² to 20 g/m².

The bonding agent HS may be, for example, heat-sealing agent, pressure-sensitive adhesive, or the like. The types of bonding agent HS applied to the side SD, the bottom BT, and the top TP may be different.

The heat-sealing agent may be, for example, thermoplastic resin. Examples of the thermoplastic resin include polyethylene and modified resins thereof, ionomer resins, ethylene-methacrylic acid copolymer resins, ethylene-acrylic acid copolymer resins, ethylene-vinyl acetate copolymer resins, styrene-acrylic acid copolymer resins, cellulose acetate resins, polyester resins, polylactic acid resins, polyhydroxyalkanoic acid resins, polybutylene succinate resins, polybutylene succinate adipate resins, hydroxybutyrate-hydroxyhexanoate copolymer resins, polyvinyl alcohol resins, ethylene-vinyl alcohol copolymer resins, polypropylene and modified resins thereof, polyhydroxybutyric acid resins, acrylic acid resins, methacrylic acid resins, polyethylene terephthalate resins, and polyamide resins. The heat-sealing agent used is a material obtained by dispersing, dissolving, or emulsifying thermoplastic resin in water or solvent.

Examples of pressure-sensitive adhesive include modified vinyl acetate resin, vinyl acetate resin, acrylic-modified vinyl acetate copolymer resin, vinyl copolymer resin, ethylene-vinyl acetate copolymer resin, urea resin, melamine resin, phenol resin, resorcinol resin, chloroprene rubber, epoxy resin, urethane resin, silicone resin, modified silicone resin, styrene-butadiene rubber copolymer resin, isobutene-maleic anhydride copolymer resin, vinyl chloride resin, starch, nitrile rubber, rosin, acrylic acid resin, methacrylic acid resin, acrylic acid ester resin, methacrylic acid ester resin, and the like.

As shown in FIG. 1C, the paper container PC includes base paper 14. The base paper 14 used for the body member 11 has a basis weight of, for example, 150 to 400 g/m². The base paper 14 used for the bottom plate member 12 has a basis weight of, for example, 150 to 400 g/m². If the basis weight is less than 150 g/m², the container would not be able to stand by itself due to lack of stiffness. If the basis weight is more than 400 g/m², it would be impossible to form the top curl due to excessive stiffness.

The composite container 10 is structured such that the base paper 14 of the paper container PC is exposed at the adhesion surface BS between the paper container PC and the film FL. A print layer 15, which decorates the composite container 10, is formed on the outer surface OS of the base paper 14. The print layer 15 displays information such as pictures and characters, and marks described below on the outer surface OS of the composite container 10 by printing. For example, overprint varnish (OP varnish), heat-sealing agent, laminate finish, etc. may be used as the print layer 15. This allows the composite container 10 to be waterproof. The print layer 15 may be a combination of ink and OP varnish, a combination of ink and heat-sealing agent, or a combination of ink and laminate finish. These combinations provide the aforementioned waterproofing effect and also prevent the ink from fading.

The print layer 15 includes marks on the outer surface OS of the base paper 14 which are used to apply the bonding agent HS to predetermined locations on the inner surface IS of the base paper 14. The bonding agent HS is applied using these marks as a reference. Furthermore, the marks on the print layer 15 are used as a reference when the blank for the body member 11 is cut out in accordance with the positions of the bonding agent HS on the inner surface IS of the base paper 14. In implementations in which the function of the marks is replaced by another method, the print layer 15 may be omitted.

The film FL is bonded to the adhesion surface BS, which is the inner surface IS of the base paper 14 of the paper container PC. In order to firmly bond the film FL to the paper container PC, the film FL needs to be in contact with the exposed portions of the base paper 14 as described above. The thickness of the film FL varies depending on the adhesion positions to the paper container PC, with the part of the film FL adhered to the bottom portion P3 (see FIG. 1A) of the paper container PC being thicker than the part of the film FL adhered to the body inner wall P2 (see FIG. 1A). The thick thickness of the film FL on the bottom portion P3 prevents pinholes from being formed through the film FL when the composite container 10 is filled with sharp contents or when the composite container 10 is dropped. The thick thickness of the film FL on the bottom portion P3 makes it unlikely for the film to shrink due to the heat generated by the contents when heated in a microwave oven, thereby preventing the peeling between the paper container PC and the film FL. The thick thickness of the film FL on the bottom portion P3 brings the center of gravity of the composite container 10 closer to the bottom portion P3, making the composite container 10 less likely to tip over. It should be noted that the thickness of the film FL would be modified depending on the adhesion positions in accordance with modifications in the inner diameter of the inlet portion PCa of the paper container PC and the height of the paper container PC.

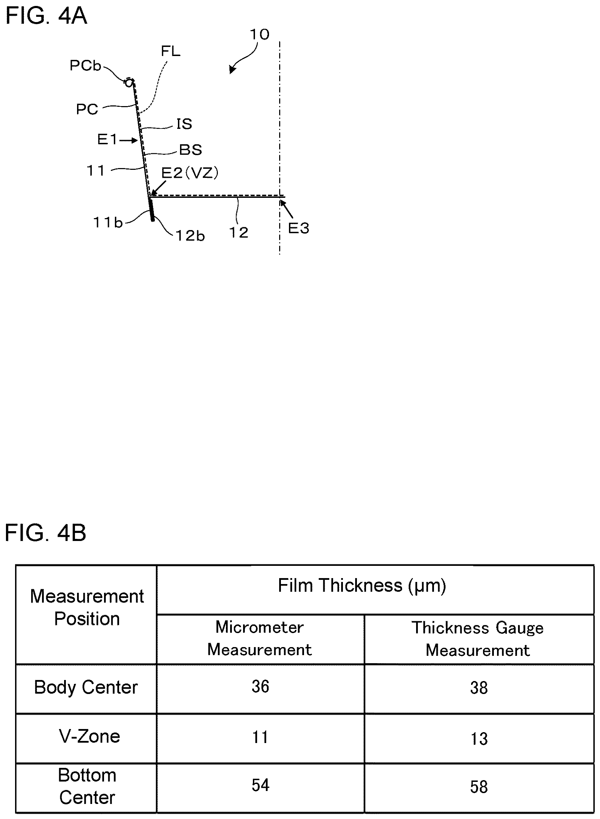

FIG. 4A is a diagram illustrating the thicknesses of the film FL bonded to paper containers PC. FIG. 4B is a table illustrating specific examples of the thickness of the film FL. The thickness of the film FL before bonding was 100 µm. The thicknesses were measured by a method using a micrometer or a method using a thickness gauge. The measuring points were four points at the circumference of the body center E1 of the film FL, four points at the circumference of the V-zone E2, and one point at the bottom center E3. The number of samples was five, and the measured values shown in FIG. 4 are average values. The measured values of the body center E1 and the V-zone E2 were obtained by averaging the values for the four points of the body center E1 and the four points of the V-zone E2 for each sample, and further averaging the averaged values for the five samples. The measured value of the bottom center E3 was obtained by averaging the measurements of one point of the bottom center E3 for five samples. The V-zone E2 corresponds to the V-zone VZ shown in FIGS. 2A and 2B. The V-zone VZ is the portion where the body member 11 and the bottom plate member 12 are joined.

As shown in FIG. 1C, the film FL has a three-layer structure. Specifically, the film FL includes, in order from the adhesion surface BS of the base paper 14, an adhesive layer 16, an intermediate layer 17, and a base material layer 18 that supports the adhesive layer 16 and the intermediate layer 17.

The base material layer 18 is a layer provided on the innermost portion of the composite container 10 and in contact with the contents of the composite container 10. The base material layer 18 has water resistance, chemical resistance, etc. The base material layer 18 may be made of, for example, polypropylene (PP), polyethylene (PE), or the like.

The intermediate layer 17 is a layer that mainly suppresses pinhole formation. For example, a laminate of nylon (Ny) and ethylene vinyl alcohol resin (EVOH), a laminate of ionomer and EVOH, or the like may be used as the intermediate layer 17. Ny and ionomer, which have elasticity and flexibility, have the function of preventing pinholes through the film FL. EVOH, which has gas barrier properties and oil resistance, functions as a barrier material. The film FL can be made thinner by using the intermediate layer 17.

The adhesive layer 16 is a layer adhered to the base paper 14 of the paper container PC. As shown in FIG. 1A, the adhesive layer 16 is adhered to the surfaces of all of the inlet portion PCa or flange P1, the body inner wall P2, and the bottom portion P3 of the paper container PC. However, the adhesive layer 16 is not adhered to the V-zone VZ. The adhesion of the adhesive layer 16 is such that the paper fibers adhere to the film FL when the film FL is peeled off from the base paper 14. Specifically, the adhesion of the adhesive layer 16 ranges from 0.5 N/mm to the strength that causes paper delamination. The measuring width for the adhesion is 15 mm.

Examples of the adhesive layer 16 include polyolefins such as polypropylene and polyethylene, modified resins thereof, polyester resins such as polyvinyl chloride and polyethylene terephthalate, ethylene-vinyl acetate copolymer resin (EVA), ethylene-vinyl alcohol copolymer resin, polyamide resin, polyvinylidene chloride resin, polystyrene resin, polycarbonate resin, polybutene resin, and polyvinyl alcohol resin, and other thermoplastic resins. Preferably, the adhesive layer 16 is made of a material having a high adhesiveness so as to adhere uniformly to the base paper 14 of the paper container PC.

Examples of the configuration of the film FL are listed below. The left sides of the configuration examples correspond to the base paper 14, and the right sides correspond to the inner surface IS side of the composite container 10. In the configurations listed below, molten thermoplastic resins are formed into films and, unlike adhesives, are not dispersed, dissolved, or emulsified in water or solvent. The combination of materials constituting the film FL may be modified as appropriate, as long as the film FL has the functions of the adhesive layer 16, the intermediate layer 17, and the base material layer 18.

**Configuration Examples of Film FL**

| | | |
|---|---|---|
| (Base Paper Side) | PE/EVOH/Ny/PP | (Inner Surface Side of Composite Container) |
| (Base Paper Side) | PP/EVOH/Ny/PP | (Inner Surface Side of Composite Container) |
| (Base Paper Side) | PE+PP/EVOH/Ny/PP | (Inner Surface Side of Composite Container) |
| (Base Paper Side) | EVA/EVOH/Ny/PP | (Inner Surface Side of Composite Container) |
| (Base Paper Side) | PE/EVOH/Ny/PE | (Inner Surface Side of Composite Container) |
| (Base Paper Side) | EVA/EVOH/Ny/PE | (Inner Surface Side of Composite Container) |
| (Base Paper Side) | PP/Ny/PP | (Inner Surface Side of Composite Container) |
| (Base Paper Side) | PE/Ny/PP | (Inner Surface Side of Composite Container) |
| (Base Paper Side) | PE+PP/Ny/P | (Inner Surface Side of Composite Container) |
| (Base Paper Side) | EVA/Ny/PP | (Inner Surface Side of Composite Container) |
| (Base Paper Side) | PE/Ny/PE | (Inner Surface Side of Composite Container) |
| (Base Paper Side) | EVA/Ny/PE | (Inner Surface Side of Composite Container) |
| (Base Paper Side) | EVA/EVOH/ionomer/PE | (Inner Surface Side of Composite Container) |
| (Base Paper Side) | PE/EVOH/ionomer/PE | (Inner Surface Side of Composite Container) |
| (Base Paper Side) | PP/EVOH/ionomer/PP | (Inner Surface Side of Composite Container) |
| (Base Paper Side) | PE/EVOH/ionomer/PP | (Inner Surface Side of Composite Container) |
| (Base Paper Side) | EVA/EVOH/ionomer/PP | (Inner Surface Side of Composite Container) |
| (Base Paper Side) | PE+PP/EVOH/ ionomer/PP | (Inner Surface Side of Composite Container) |

The film FL is deformable along the inner surface IS of the paper container PC during compressed air forming, and has a thickness to prevent pinholes. The total thickness of the film FL before bonding is, for example, 90 µm to 250 µm, and preferably 100 µm. The total thickness of the base material layer 18 and the intermediate layer 17 is, for example, 60 µm to 80 µm, and the thickness of the adhesive layer 16 is, for example, 20 µm to 40 µm. The composition ratio of the adhesive layer 16, the intermediate layer 17, and the base material layer 18 is, for example,
(adhesive layer) : (intermediate layer + base material layer) = 2:8 to 4:6, and the composition ratio may be changed as appropriate as long as the barrier properties, adhesive properties, etc. of the film FL are maintained. The performance of the film FL is significantly affected by its thickness and less so affected by its ratio. For example, the overall thickness of the film FL affects whether the film FL will tear when the film FL is bonded. In addition, the film FL is less likely to tear when the film FL contains Ny, EVOH, or ionomer. The thickness of the adhesive layer 16 affects the adhesion between the film FL and the base paper 14. The effect of the thickness of the adhesive layer 16 also varies depending on the type of resin used in the adhesive layer 16. The oxygen barrier property of the film FL is affected by the thickness of EVOH, which acts as an oxygen barrier.

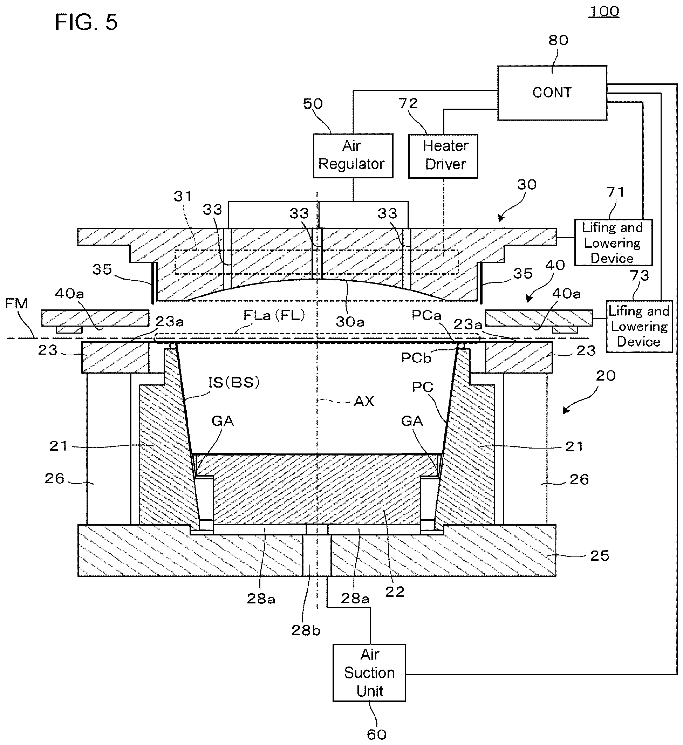

The film bonding device 100 shown in FIG. 5 includes a lower mold member 20, a compressed air device 30, a support member 40, an air regulator 50, an air suction unit 60, and a control device 80. The film bonding device 100 bonds a film FL or a film material FM to the inner surface IS or the adhesion surface BS of a paper container PC by using pressure difference. As will be described in detail later, the pressure difference is generated by introducing compressed air from above the film FL or by vacuum suction from below the paper container PC.

The lower mold member 20 includes a cylindrical cavity 21, a disk-shaped base 22, and an annular film holding member 23, and includes a disk-shaped base 25 which fixes the cavity 21 and the base 22 in alignment with each other, and a support 26 which fixes the film holding member 23 upwardly relative to the outer periphery of the base 25. The paper container PC, which is a material to be processed, is stably supported in the lower mold member 20 by the cavity 21 and the base 22. A gap GA is formed between the inner surface of the lower portion of the cavity 21 and the periphery of the base 22, and vent paths 28a and 28b are formed through the bottom portion of the base 22. The air around the paper container PC can be evacuated to the air suction unit 60 through the gap GA and the vent paths 28a and 28b.

The compressed air device 30 is a disk-shaped member having a heater 31 incorporated therein and a number of air vents 33. The compressed air device 30 is fixed with an annular cutter 35 on its outer periphery thereof for cutting out a workpiece portion FLa to be bonded to the inner surface IS of the paper container PC from the sheet-like film material FM that has moved over the lower mold member 20. The workpiece portion FLa corresponds to the film FL of the composite container 10 shown in FIG. 1A, and so on. The compressed air device 30 is driven by a lifting and lowering device 71 and can move up and down in the vertical directions parallel to the axis AX. When the compressed air device 30 is raised, the paper container PC can be placed in the lower mold member 20. When the compressed air device 30 is lowered, the film material FM can be pressed against the inlet portion PCa formed at the upper portion of the paper container PC, allowing the cutter 35 to cut out the workpiece portion FLa from the film material FM. The heater 31, which is driven by a heater driver 72, can adjust the temperature to soften the workpiece portion FLa of the film material FM. The compressed air device 30 can reduce the pressure in the space facing the lower surface 30a of the compressed air device 30 through the air vents 33 using the air regulator 50, and can bring the workpiece portion FLa of the film material FM into close contact with the lower surface 30a. Thus, the film material FM can be be softened to a desired state while being held in place. The lower surface 30a of the compressed air device 30 has a curved shape. This allows the workpiece portion FLa to be bonded to the lower surface 30a with wrinkles being smoothed while being heated from the edge. The lower surface 30a is not limited to a curved shape and may be a flat shape.

The support member 40 temporarily fixes the film material FM to the paper container PC by clamping the film material FM between itself and the film holding member 23 of the lower mold member 20. The support member 40 is driven by a lifting and lowering device 73 and can move up and down in the vertical directions parallel to the axis AX. When the support member 40 is raised, the film material FM can be moved horizontally over the paper container PC. When the support member 40 is lowered, the film material FM is clamped and fixed between the upper surface 23a of the film holding member 23 and the lower surface 40a of the support member 40.

The air regulator 50 is an air suction device, and also functions as a compressed air blowing device. The air regulator 50 is communicated with the air vents 33 of the compressed air device 30. The air regulator 50 operates as an air suction device at a predetermined timing to suck the workpiece portion FLa of the film material FM onto the lower surface 30a of the compressed air device 30, thereby softening the workpiece portion FLa. The air regulator 50 operates as a compressed air blowing device at a predetermined timing to stretch the softened workpiece portion FLa by the compressed air introduced from the upper side, thereby deforming the workpiece portion Fla to be pressed against the inner surface IS of the paper container PC. The temperature of the compressed air supplied by the air regulator 50 through the air vents 33 may be adjusted in temperature to maintain the softening degree of the workpiece portion FLa of the film material FM.

The air suction unit 60 can reduce the pressure in the cavity 21 of the lower mold member 20 by vacuuming through the gap GA and the vent paths 28a and 28b, and can reduce the pressure around the paper container PC placed on the lower mold member 20. This facilitates bringing the stretched workpiece portion FLa of the film material FM into close contact with the inner surface IS of the paper container PC during the compressed air blowing of the workpiece portion FLa of the film material FM.

The control device 80 controls the overall operation of the film bonding device 100. The control device 80 controls the temperature of the compressed air device 30 by controlling the driving state of the heater driver 72, and adjusts the elevation of the compressed air device 30 by controlling the driving state of the lifting and lowering device 71. The control device 80 adjusts the elevation of the support member 40 by controlling the driving state of the lifting and lowering device 73. The control device 80 can adhere the workpiece portion FLa of the film material FM to the lower surface 30a of the compressed air device 30 at the desired timing by controlling the driving state of the air regulator 50, and can deform the softened workpiece portion FLa to be pressed against the inner surface IS of the paper container PC. Meanwhile, the control device 80 controls the driving state of the air suction unit 60 in synchronization with the air regulator 50, reduces the pressure around the paper container PC, and assists in the operation of adhering the stretched workpiece portion FLa of the film material FM to the inner surface IS of the paper container PC.

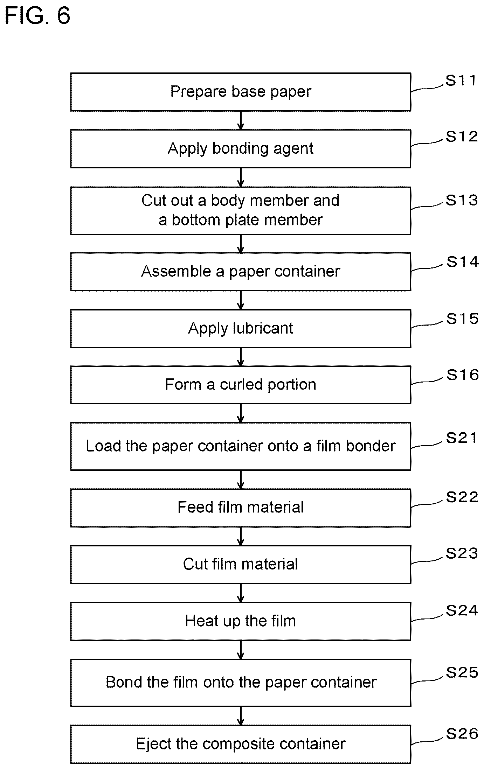

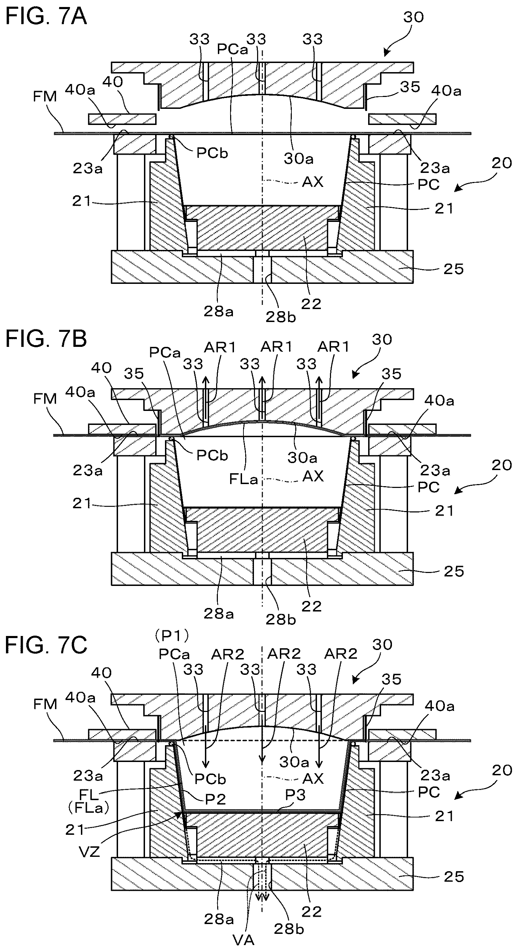

A method of manufacturing the composite container 10 is described below with reference to FIGS. 6 and 7. The device for assembling the paper container PC is omitted from the drawings.

### Assembly of Paper Container

First, as shown in Fig. 6, the base paper 14 for the paper container PC is prepared, and, if necessary, a print layer 15 is formed on the surface that will become the outer surface OS of the paper container PC (step S11). A laminate finish may be applied to the outer surface OS after the printing.

Subsequently, bonding agent HS is applied to predetermined locations on the surface of the body member 11 that will become the inner surface IS of the paper container PC (bonding agent applying step S12). The locations where the bonding agent HS is applied are the portion corresponding to the side joint 13a (the side SD), the portions corresponding to the bottom joint 13b (the bottom BT), and the portion corresponding to the curled portion PCb at the top of the bottom plate member 12 (the top TP). The bonding agent HS is applied to the body member 11 by printing or the like. The marks on the print layer 15 are used as a reference for alignment when the bonding agent HS is applied. A laminate finish may be applied to the outer surface OS of the base paper 14 before or after step S12.

Subsequently, the base paper 14 is cut out into the body member 11 and the bottom plate member 12, which are parts (or blanks) of the paper container PC (step S13). The marks on the print layer 15 are used as a reference when the blanks are cut out.

This is followed by joining the body member 11 and the bottom plate member 12 together to assemble the paper container PC into a cup shape (joining step S14). The paper container PC is assembled using an assembly device (not shown). The body member 11 and the bottom plate member 12 are joined together by heating the bonding agent HS. The heating temperature is equal to or higher than the melting point of the bonding agent HS, preferably in the range of 200°C to 500°C.

After the body member 11 and the bottom plate member 12 are joined, lubricant is applied to the upper portion (the top TP) of the inner surface IS of the body member 11 (lubricant applying step S15). Since the bonding agent HS has been previously applied to the upper portion of the body member 11 in step S12, the lubricant does not easily permeate the base paper 14, thereby facilitating the formation of the curled portion PCb in the following process.

After the lubricant is applied, the upper portion of the paper container PC is rolled outward to form a curled portion PCb (curled portion forming step S16).

### Bonding of Film to Paper Container

The paper container PC assembled in steps S11 to S16 is set in the film bonding device 100 (step S21). Specifically, the paper container PC is placed on the lower mold member 20 of the film bonding device 100. At this moment, the control device 80 actuates the compressed air device 30 and the support member 40 to separate the compressed air device 30 and the support member 40 from the lower mold member 20.

Subsequently, a film material FM to be bonded to the inner surface IS of the paper container PC is supplied to the film bonding device 100 (step S22). Specifically, the control device 80 moves the film material FM in the horizontal direction over the paper container PC with the support member 40 raised (see FIG. 7A).

This is followed by cutting a workpiece portion FLa from the film material FM in accordance with the shape of the inlet portion PCa of the paper container PC (step S23). Specifically, the control device 80 lowers the support member 40 and fixes the film material FM between the upper surface 23a of the film holding member 23 and the lower surface 40a of the support member 40. The control device 80 further lowers the compressed air device 30 to pressurize the film material FM onto the inlet portion PCa of the paper container PC, and causes the cutter 35 to cut out the workpiece portion FLa from the film material FM.

Subsequently, the workpiece portion FLa cut out from the film material FM is attached to the compressed air device 30 of the film bonding device 100 to heat the workpiece portion FLa (film heating step S24). Specifically, the control device 80 operates the air regulator 50 to suck air AR1 through the air vents 33, thereby sucking the workpiece portion FLa onto the lower surface 30a of the compressed air device 30 (see FIG. 7B). In addition, the control device 80 operates the heater 31 to soften the workpiece portion FLa sucked onto the compressed air device 30. The heating temperature of the heater 31 is equal to or higher than the melting point of the resin constituting the adhesive layer 16, preferably, 160°C to 190°C.

Subsequently, the workpiece portion FLa of the film material FM is bonded to the inner surface IS of the paper container PC by compressed air forming while the paper container PC is vacuumed (film bonding step S25). The workpiece portion FLa is adhered to the flange P1, the body inner wall P2, the bottom portion P3, and the V-zone VZ of the paper container PC in series. This makes it possible to ensure the thickness of the film FL while adhering the film FL tightly to the inner surface IS of the paper container PC without leaving air between the paper container PC and the film FL. It should be noted that the film FL is not adhered to the V-zone VZ. Although the film FL is not directly adhered to the inner surface IS of the paper container PC in the V-zone VZ, the film FL is in close proximity to the inner surface IS without peeling. Specifically, the control device 80 operates the compressed air device 30 to introduce compressed air AR2 from above the workpiece portion FLa through the air vents 33, thereby stretching and deforming the softened workpiece portion FLa so that the softened workpiece portion FLa is pressed against the inner surface IS of the paper container PC (see FIG. 7C). In addition, the control device 80 operates the air suction unit 60 to perform vacuum suction and thereby reduce the pressure around the paper container PC by exhausting air VA through the gap GA (see FIG. 5) and the vent paths 28a and 28b, and bonds the workpiece portion FLa to the inner surface IS of the paper container PC as the film FL in cooperation with the compressed air blow generated by the compressed air device 30 (see FIG. 7C). Shaping the heated film FL by using the pressure difference makes it possible to improve in the formability and adhesion of the film FL to the paper container PC.

Finally, the composite container 10 with the film FL bonded to the paper container PC is ejected from the film bonding device 100 (step S26). Specifically, the control device 80 operates the compressed air device 30 and the support member 40 to raise the compressed air device 30 and the support member 40, and eject the composite container 10 from the lower mold member 20.

While the film FL is bonded by using the pressure difference created by both the introduction of compressed air (compressed air forming) and vacuum suction in the above, the film FL may also be bonded by using the pressure difference created by either compressed air forming or vacuum suction.

### Implementation Examples

In the following, the assemblability of the paper container and the adhesion of the film to the paper container are described as implementation examples. In the implementation examples, HC(E)COC (manufactured by O&C Ivoryboard Co., Ltd.) having a basis weight of 300 g/m² was used for the base paper 14 of the body member 11 and the bottom plate member 12. The outer surface OS of the body member 11 was printed with OP varnish (overprint varnish). The air permeance (the air permeance measured by the Oken method) of the base paper 14 with OP varnish applied to the outer surface OS was 624 sec. The bonding agent HS used was, for example, CHEMIPEARL S500 (registered trademark, manufactured by Mitsui Chemicals, Inc.) as ionomer. The applying amount of the bonding agent HS was 9.4 g/m².

### (A) Assemblability of Paper Container

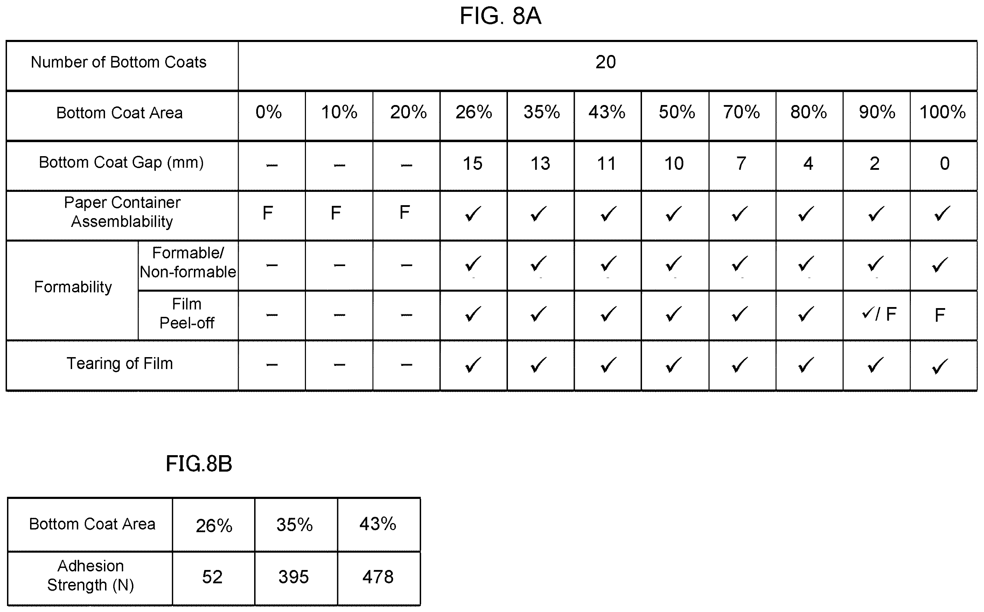

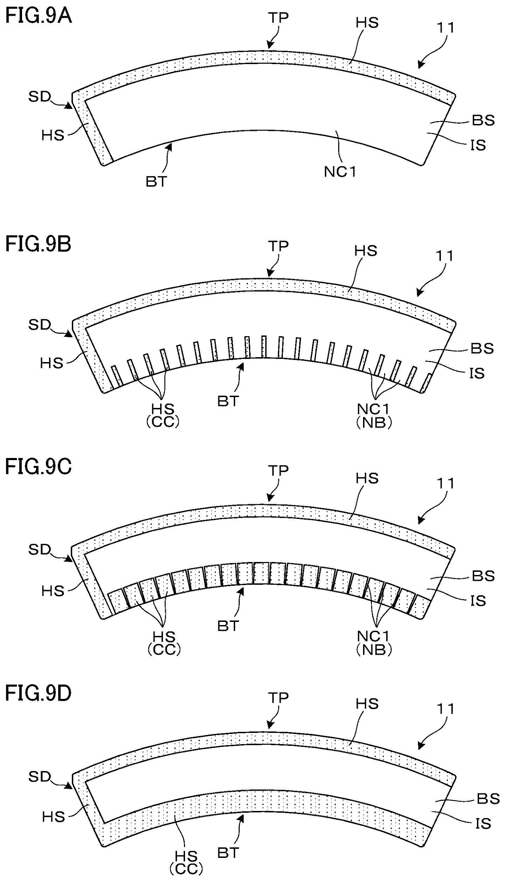

FIGS. 8A and 8B show the relationship between the bottom coat area of the bonding agent HS on the paper container PC and the assemblability of the paper container PC. The bottom coat area is the application area of the bonding agent HS on the bottom BT shown in FIGS. 9A to 9D. FIG. 9A shows the case where the bottom coat area is 0%, FIG. 9B shows the case where the bottom coat area is 26%, FIG. 9C shows the case where the bottom coat area is 90%, and FIG. 9D shows the case where the bottom coat area is 100%. The bottom coat area is the total area of one or more bottom applied portions CC of the bottom BT, excluding the bottom non-applied portion NC1. In the implementation examples, the number of bottom applied portions CC was fixed at 20, and the bottom coat area was varied by adjusting the area of each bottom applied portion CC. The bottom applied portions CC had a uniform width or the same area and were provided at regular intervals. When the bottom coat area was 0%, no bottom applied portions CC were provided, and the bonding agent HS was not applied to the bottom BT (see FIG. 9A). When the bottom coat area was 100%, the entire bottom BT was used as the bottom applied portion CC, and the bonding agent HS was applied to the entire bottom BT (see FIG. 9D). In FIG. 8A, the number of bottom applied portions CC for the bottom coat area of 100% was defined as 20, assuming that there were no gaps between the bottom applied portions CC.

By making the bottom applied portions CC have a uniform width or the same area, the bonded portions of the body member 11 and the bottom plate member 12 are provided with a uniform width or the same area at regular intervals. This allows air to be evacuated evenly from the air vents AP, i.e., the unbonded portions NB, so that no stress is applied to any one of the multiple air vents AP, making tearing of the film FL unlikely. The bottom coat gaps BG (see FIG. 1B) shown in FIG. 8A correspond to the widest width of the individual unbonded portions NB shown in FIG. 1B, which act as inlets through which air VA (see FIG. 7C) passes. As shown in Fig. 8A, the width of the bottom coat gaps BG needs to be 4 mm or more. This allows the air to be evacuated evenly through the multiple air vents AP (see Fig. 2B) so that no peeling of the film FL occurs in the V-zone VZ.

In FIG. 8A, the evaluation of the assemblability of the paper container PC is indicated by the symbol "✔'' when the shape of the paper container PC was maintained and continuous assembly was achieved. When the bottom coat area was between 26% and 100%, good assemblability of the paper container PC was achieved. When the bottom coat area was 20% or less, the adhesion between the body member 11 and the bottom plate member 12 was broken when the shaped paper container PC was ejected, making continuous assembly difficult.

The adhesion of the bottom plate member 12 required for the continuous assembly of paper containers PC was measured. The adhesion of the bottom plate member 12 was measured by a strength testing machine (specifically, a universal testing machine Strograph^{™}) as the strength at which the bottom plate member 12 began to peel off when the bottom plate member 12 was compressed from the lower side or the bottom rim of the bottom plate member 12 of the paper container PC. The diameter of the compression die of the strength testing machine was 106 mm, corresponding to the shape and size of the paper container PC, and the compression speed was 100 mm/min.

FIG. 8B shows the adhesion of the bottom plate member 12. As shown in FIG. 8B, it was found that an adhesion of 52 N or more was required to achieve continuous assembly of paper containers PC. When the adhesion was 52 N or more, paper delamination occurred in the paper container PC after the bottom plate member 12 was detached, indicating that the body member 11 and the bottom plate member 12 were sufficiently bonded to each other. It should be noted that when the bottom coat area was less than 20%, the adhesion of the bottom plate member 12 was weak, and the bottom plate member 12 was likely to be detached.

### (B) Film Adhesion to Paper Container

FIG. 8A shows the relationship between the formability of the film FL on the paper container PC and the tearing of the film FL. The heating conditions for bonding the film FL or the workpiece portion FLa to the paper container PC were a heating temperature of 177°C and a heating time of 1 second. The film FL was bonded to the inner surface IS of the paper container PC by compressed air forming at a compressed air pressure of 0.05 MPa to 0.15 MPa for an air compression time of 1.2 seconds while vacuuming was performed at a vacuum pressure of -56 kPa. The evaluation of formability is indicated by the symbol "✔" when the film FL was successfully formed. In addition, the presence of lifting of the film FL in the V-zone VZ of the bottom joint 13b, formed by the body member 11 and the bottom plate member 12 was checked and the evaluation is indicated by the symbol "✔" when the lifting of the film FL was 3 mm or less. As for the tearing of the film FL, the presence of the tearing of the film FL was checked, and the evaluation is indicated by the symbol "✔" when no tearing was found. It should be noted that tearing of the film FL is likely to occur in the V-zone VZ.

As shown in FIG. 8A, the film FL exhibited good adhesion for the bottom coat areas from 26% to 80%. When the bottom coat area was 90%, partial lift occurred on the film FL in the V-zone VZ, and when the bottom coat area was 100%, lift occurred on the film FL over almost the entire periphery of the V-zone VZ. The tearing of the film FL can be addressed by adjusting the compressed air pressure, the type of film FL, the thickness of the film FL, etc.

The composite container 10 and the manufacturing method of the composite container 10 described above make it possible to stabilize the adhesion between the paper container PC and the film FL, since the base paper 14 is exposed at the adhesion surface BS between the paper container PC and the film FL, and the film FL includes an adhesive layer 16. Furthermore, the use of the bonding agent HS in the side joint 13a and the bottom joint 13b, i.e., the joints necessary for assembling the paper container PC, makes it possible to reduce the amount of resin applied to the paper container PC while maintaining the film adhesion of the entire inner surface IS of the paper container PC.

While the present invention has been described above based on embodiments, the present invention is not limited to the above described embodiments and various modifications are possible.

In the above embodiment, the film FL may be a single layer consisting only of the adhesive layer 16. In other words, the base material layer 18 and the intermediate layer 17 may be omitted from the film FL. It should be noted that even when a single layer is used, the single layer is not limited to being made of a single constituent material and may be a mixture of two or more types of resin, such as a combination of PP and PE. Furthermore, the film FL may be formed only by the adhesive layer 16 and the base material layer 18 without the intermediate layer 17.

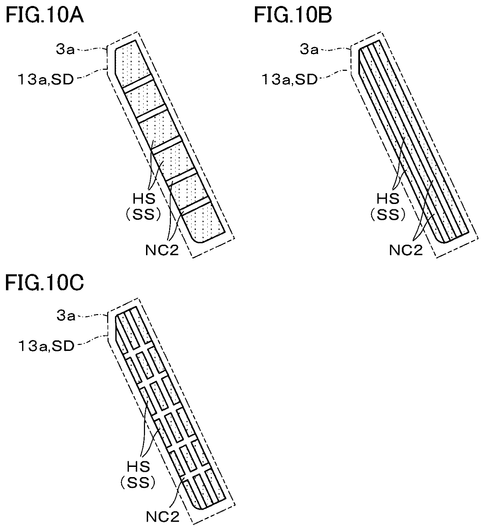

In the above embodiments, the bonding agent HS need not be applied to the entire surface of the side SD. In other words, the side applied portion SS of the bonding agent HS may not be the entire surface of the side SD. For example, as shown in FIGS. 10A to 10C, there may be side non-applied portions NC2 of the bonding agent HS on the side SD. The width of the side non-applied portions NC2 is narrower than the width of the bottom non-applied portions NC1 shown in FIG. 1B.

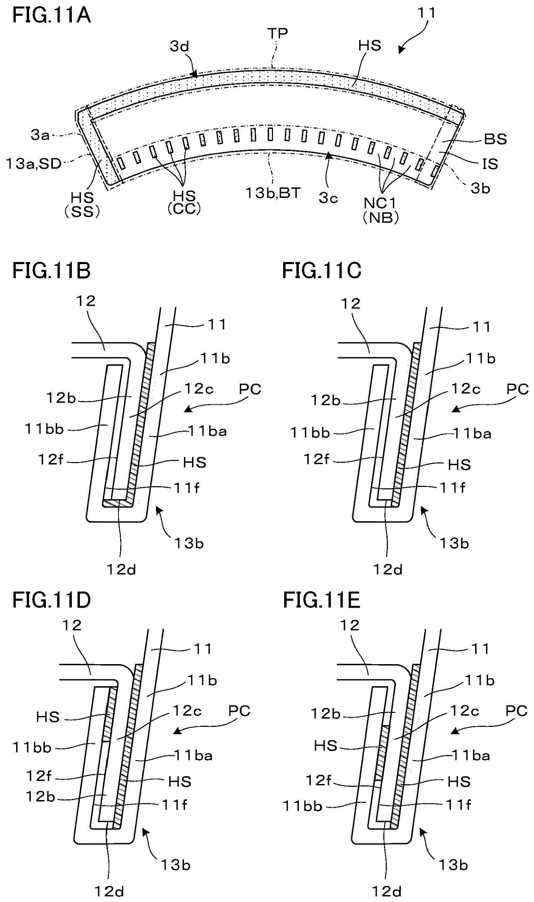

In the above embodiments, the positions where the bonding agent HS is applied at the bottom joint 13b may be modified as appropriate. For example, as shown in FIG. 11A, the bottom applied portions CC may be regions extending to intermediate positions of the bottom BT in the vertical direction of the body member 11, rather than regions extending to the lowest end of the bottom BT. FIGS. 11B and 11C are enlarged cross-sectional views of the periphery of the bottom joint 13b of the paper container PC after assembly. The joining state of the bottom portion 11b of the body member 11 with the bottom plate member 12 varies depending on the application positions of the bottom applied portions CC.

FIG. 11B shows an example of bonding between the bonding agent HS applied to the body member 11 and the peripheral wall 12b and edge portion 12d of the bottom plate member 12. FIG. 11C shows an example of bonding between the bonding agent HS applied to the body member 11 and the peripheral wall 12b of the bottom plate member 12. The rear surface 12f of the bottom plate member 12 and the inner surface 11f of the body member 11 are not joined at the bottom joint 13b shown in FIGS. 11B and 11C. Accordingly, the inner wall 11bb of the body member 11 is easily separated from the peripheral wall 12b of the bottom plate member 12 at the bottom joint 13b. In this case, since the ventilation areas along the inner wall 11bb increase in the air vents AP, the vacuuming can be performed in a short time. This allows the air to be evenly vented through the air vents AP, thereby reducing the film shaping time and lowering the compressed air pressure. Further, when a user holds the composite container 10 by hooking his or her fingers on the bottom portion 11b or the bottom rim after heating the contents of the composite container 10 in a microwave oven, the inner wall 11bb, which is separated from the bottom plate member 12, functions as a barrier to prevent the user's fingers from touching the bottom surface of the composite container 10, thereby preventing burns.

It should be noted that the locations where the bonding agent HS is applied in the vertical direction may be divided in the bottom joint 13b. For example, the bottom applied portions CC may each be divided in the vertical direction of the body member 11 into a region between the upper end and an intermediate position of the bottom BT and a region on the lower end side. In this case, as shown in FIGS. 11D and 11E, the outer wall 11ba of the body member 11 and the peripheral wall 12b of the bottom plate member 12 are joined, and a portion of the inner wall 11bb of the body member 11 is joined to a portion of the peripheral wall 12b of the bottom plate member 12 (an upper end portion or a middle portion of the rear surface 12f of the peripheral wall 12b in cross-sectional view). In this case, the bonding agent HS applied to the body member 11 adheres to both sides of the peripheral wall 12b of the bottom plate member 12 so that the inner wall 11bb is less likely to separate from the peripheral wall 12b than when the bonding agent HS adheres to one side of the peripheral wall 12b.

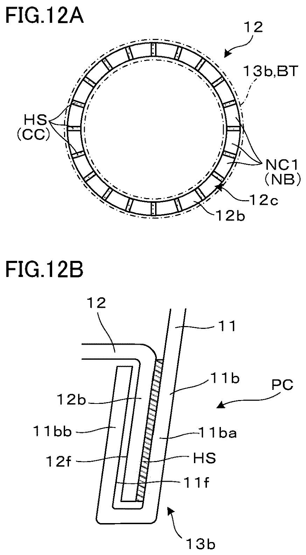

In the above embodiments, the bonding agent HS may be applied to the outer periphery 12c of the bottom plate member 12 without applying the bonding agent HS to the body member 11. As shown in FIG. 12A, a plurality of bottom applied portions CC are radially arranged in a region corresponding to the bottom BT on the outer periphery 12c of the bottom plate member 12. FIG. 12B is an enlarged cross-sectional view of a portion around the bottom joint 13b of the paper container PC after assembly. The rear surface 12f of the bottom plate member 12 and the inner surface 11f of the body member 11 are not joined at the bottom joint 13b shown in FIG. 12B.

In the above embodiments, the composite container 10 is not limited to being circular in plan and may have various polygonal or elliptical shapes.

In the above embodiments, the film material FM may be fed into the film bonding device 100 while being heated in the state where the film material FM is held between two additional heating plates (not shown), not limited to implementations in which the workpiece portion FLa is heated after the film material FM is cut as shown in FIG. 7B. Alternatively, a ceramic heater or the like may be used to heat the film material FM or the workpiece portion FLa with radiant heat from the heater. In this case, the heater 31 of the compressed air device 30 may be omitted as long as the softening of the film FL can be maintained.

Although the film FL is shaped while being heated in the above embodiments, the film FL may be shaped in a state in which the paper container PC is also heated.

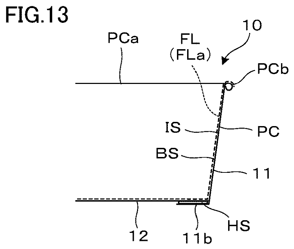

Although the bottom plate member 12 is folded and attached to the bottom portion 11b of the body member 11 in the above embodiments, the body member 11 may be folded and the bottom portion 11b of the body member 11 may be attached to the bottom plate member 12 without the bottom plate member 12 being folded, as shown in FIG. 13.

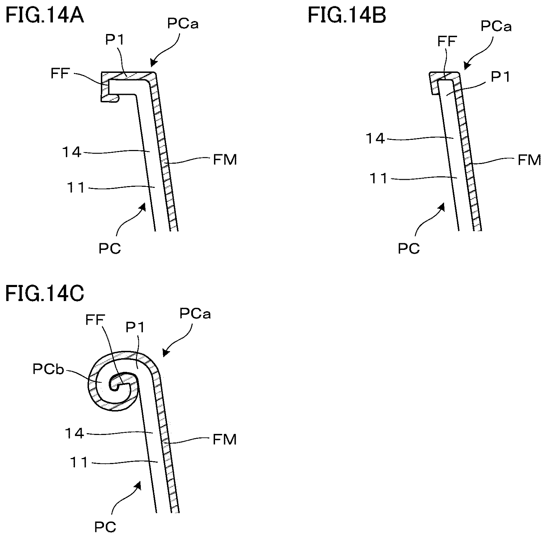

In the above embodiments, the inlet portion PCa or the flange P1 of the composite container 10 need not to be provided with the curled portion PCb. In this case, as shown in FIG. 14A, the flange end face FF of the composite container 10 may be formed to face horizontally. Alternatively, as shown in FIG. 14B, the flange end face FF of the composite container 10 may be formed facing upward. For such types of flanges P1, the method of bonding the film FL may be appropriately modified in the shape of the mold, or may be modified so that the film material FM is preheated by radiant heat, followed by vacuum pressure molding of the film material FM on the paper container PC serving as a lower mold in the state in which the film area to be rolled around the flange end face FF is secured.

In the above embodiments, the curled portion PCb may be formed after the film FL is bonded. Specifically, the paper container PC is first assembled without forming the curled portion PCb. Then, as shown in FIG. 14B, the flange end face FF of the composite container 10 is formed facing upward. The film FL or film material FM is preheated by radiant heat, and then bonded to the paper container PC serving as the lower mold by vacuum pressure molding in the state in which the film area to be rolled around the flange end face FF is secured. In this process, the base paper 14 of the paper container PC is not cut. As shown in FIG. 14C, the film FL and the base paper 14 are curled together to form a curled portion PCb after the film is bonded.

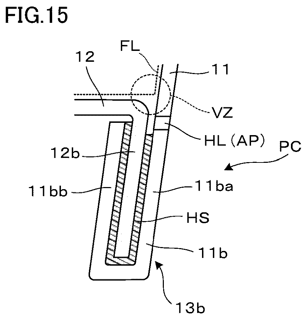

Although the air vents AP in the bottom joint 13b are formed by the unbonded portions NB corresponding to the bottom non-applied portions NC1 of the bonding agent HS defined for the body member 11 in the above embodiments, the air vents AP may be formed by a different method. For example, as shown in FIG. 15, the air vents AP may be formed by providing holes HL, perforations, or the like, slightly below the portion of the body member 11 corresponding to the V-zone VZ. In this case, the joining in the bottom joint 13b is achieved by applying the bonding agent HS to the entire surface of the bottom BT of the body member 11, as shown in FIG. 9D. The application positions of the bonding agent HS are adjusted so that the holes HL or similar are exposed to allow air to be vented through the air vents AP.

It would be apparent that the present invention is not limited to the embodiments described above, and that the embodiments may be modified or changed as appropriate within the scope of the technical concept of the present invention. The techniques of each embodiment may be used in other embodiments as long as there is no technical inconsistency.

This application claims priority from Japanese patent application No. 2023-057757, filed on March 31, 2023, the disclosure of which is incorporated herein by reference in its entirety.

## Claims

1. A composite container, comprising:
a paper container with a body member and a bottom plate member joined together; and
a resin film bonded to an inner surface of the paper container,
wherein base paper of the paper container is exposed at an adhesion surface between the paper container and the film,
wherein, with respect to the paper container, joining at a side joint that joins a side surface of the body member and joining at a bottom joint that joins the body member and the bottom plate member are each achieved via bonding agent, and
wherein the film comprises an adhesive layer adhered to the base paper of the paper container.

2. The composite container set forth in claim 1, wherein a portion of the bottom joint is provided with an air vent which allows air to be vented to an outside of the paper container.

3. The composite container set forth in claim 1 or 2, wherein the paper container comprises a curled portion where a top portion of the body member is rolled outwardly, and
wherein a portion of the inner surface of the paper container corresponding to the curled portion is provided with the bonding agent.

4. The composite container set forth in any one of claims 1 to 3, wherein a thickness of the film varies depending on adhesion positions to the paper container, and
wherein a part of the film adhered to a bottom portion of the paper container is thicker than a part of the film adhered to a body inner wall of the paper container.

5. A manufacturing method of a composite container, the composite container comprising:
a paper container with a body member and a bottom plate member joined together; and
a resin film bonded to the inner surface of the paper container,
wherein base paper of the paper container is exposed at an adhesion surface between the paper container and the film, and the film comprises an adhesive layer adhered to the base paper of the paper container,
the method comprising:
a bonding agent applying step of applying bonding agent to portions of the inner surface of the paper container, the portions corresponding to a side joint that joins a side surface of the body member together and a bottom joint that joins the body member and the bottom plate member;
a joining step of completing respective joining of the side joint and the bottom joint; and
a film bonding step of bonding the film to the adhesion surface of the paper container using a pressure difference.

6. The manufacturing method set forth in claim 5, wherein a portion of the bottom joint is provided with an air vent which allows air to be vented to an outside of the paper container.

7. The manufacturing method set forth in claim 5 or 6, wherein the paper container comprises a curled portion where a top portion of the body member is rolled outwardly, and
wherein the bonding agent is applied to a portion of the inner surface of the paper container corresponding to the curled portion during the agent applying step.

8. The manufacturing method set forth in any one of claims 5 to 7, further comprising a film heating step of heating the film,
wherein the heated film is bonded to the adhesion surface of the paper container using the pressure difference during the film bonding step.

9. The manufacturing method of any one of claims 5 to 8, wherein the pressure difference is created by introducing compressed air from above the film or by vacuum suction from below the paper container.

10. The manufacturing method set forth in any one of claims 5 to 9, wherein the film is adhered to a flange, a body inner wall, a bottom portion, and a V-zone of the paper container in series.
